# EUROPEAN PATENT APPLICATION

(11) **EP 2 290 320 A1**
(43) Date of publication of application: **02.03.2011**
(21) Application number: 10172650.3
(22) Date of filing: 12.08.2010
(51) Int. Cl.: G01B 11/06

(54) **Film thickness measurement apparatus**

(30) Priority: 17.08.2009 JP 2009188381
(71) Applicant: Yokogawa Electric Corporation, Tokyo (JP)
(72) Inventor: Nishida, Kazufumi, Musashino-shi Tokyo (JP)
(74) Representative: Grünecker, Kinkeldey, Stockmair & Schwanhäusser Anwaltssozietät

(57) **Abstract**

A film thickness measurement apparatus may include a spectrum acquisition unit that irradiates a light onto a film and acquires a spectrum of a reflection light or a transmission light, a power spectrum calculating unit that calculates a power spectrum, a film thickness calculating unit that detects a peak position of the power spectrum and calculates a thickness of the film, a measurement quality calculating unit that calculates a measurement quality of the thickness, a measurement quality determining unit that determines whether the thickness is valid or invalid, and a film thickness output unit that outputs the thickness if the measurement quality determining unit determines that the thickness is valid.

## Description

### BACKGROUND OF THE INVENTION

### Field of the Invention

The present invention generally relates to a film thickness measurement apparatus that measures a thickness of a thin film by using an interference of a light. More specifically, the present invention relates to a film thickness measurement apparatus that precisely measures a thickness of a thin film that scatters a light significantly, a surface of the thin film being not flat.

Priority is claimed on Japanese Patent Application No. 2009-188381, filed August 17, 2009, the content of which is incorporated herein by reference.

### Description of the Related Art

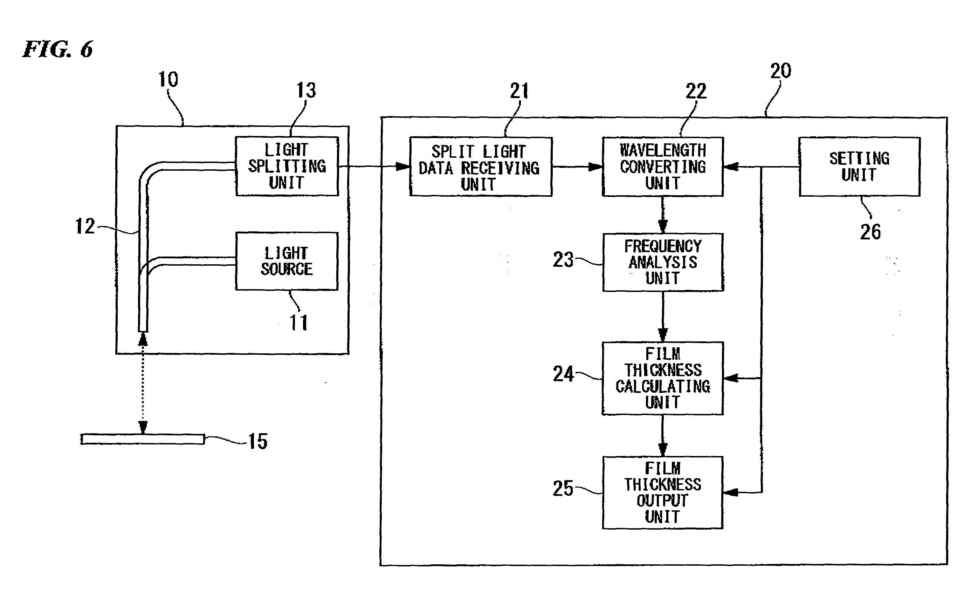

FIG 6 is a block diagram illustrating a film thickness measurement apparatus in accordance with the related art. The film thickness measurement apparatus measures a thickness of a thin film by using an interference of a light. The film thickness measurement apparatus is typically used as an online film thickness gauge in a process of manufacturing films or sheets of packaging materials or optical materials. The film thickness measurement apparatus is also used to measure film thickness distributions or film thickness errors in the course of processing the films sheets. The film thickness measurement apparatus is also used in an XY-stage for handling glass panels.

The film thickness measurement apparatus includes a reflection spectrum acquisition unit 10 and an operation unit 20. The reflection spectrum acquisition unit 10 includes a light source 11 and a light splitting unit 13. The reflection spectrum acquisition unit 10 irradiates white light onto a measurement target film 15 that is targeted to measure its thickness and acquires a spectrum of a light reflected by the measurement target film 15. An output light from the light source 11, which is capable of emitting white light having a wide wavelength range, is transmitted through an optical fiber 12 and is irradiated onto the measurement target film 15. A reflection light reflected by the measurement target film 15 is transmitted through the optical fiber 12 and is received by the light splitting unit 13. The light splitting unit 13 spectroscopically disperses the received light to acquire a reflection spectrum, converts the reflection spectrum into an electric signal, and outputs the electric signal.

The operation unit 20 includes a split light data receiving unit 21, a wavelength converting unit 22, a frequency analysis unit 23, a film thickness calculating unit 24, a film thickness output unit 25, and a setting unit 26. The operation unit 20 calculates a film thickness based on the reflection spectrum and outputs the film thickness. The split light data receiving unit 21 acquires the reflection spectrum, which is output from the light splitting unit 13, and outputs the reflection spectrum to the wavelength converting unit 22. The wavelength converting unit 22 selects a predetermined wavelength range from the reflection spectrum and rearranges the reflection spectrum of the selected wavelength range on an equally scaled wave number domain. Then, the wavelength converting unit 22 calculated a wave number domain reflection spectrum and outputs the wave number domain reflection spectrum to the frequency analysis unit 23.

The frequency analysis unit 23 applies a Fourier transform to the wave number domain reflection spectrum to acquire a power spectrum and outputs the power spectrum to the film thickness calculating unit 24. The film thickness calculating unit 24 calculates an optical film thickness corresponding to the frequency where a peak of the input power spectrum is acquired and calculates a corresponding physical film thickness based on the refractive index of the measurement target film 15. The film thickness output unit 25 outputs the physical film thickness to an external unit. The setting unit 26 sets data such as parameters required in calculation in the wavelength converting unit 22, the film thickness calculating unit 24, and the film thickness output unit 25.

Since the reflection light, which is reflected at the surface and the back face of the film 15, has an optical path difference depending on a product between the refractive index and the thickness of the measurement target film 15, the reflection light interferes and generates periodic interference fringes. A power spectrum, which is acquired by applying a Fourier transform to the interference fringes, has a peak at the frequency corresponding to an optical path difference. The optical film thickness is acquired by detecting the frequency corresponding to the peak point, and a physical film thickness can be acquired by dividing the optical film thickness by the refractive index.

While the film thickness is calculated based on the reflection spectrum acquired by spectroscopically dispersing the reflection light reflected by the measurement target film 15 as illustrated in FIG. 6, it may be possible to acquire a transmission spectrum by spectroscopically dispersing the light transmitted through the measurement target film 15 and measure the film thickness from the transmission spectrum.

Japanese Unexamined Patent Application, First Publication No. 2003-161605 discloses a film thickness measurement apparatus in which strobe light of a near-infrared range is irradiated onto a moving multi-layered film, and the light reflected at interfaces of each layer is received, so that the thicknesses of each layer are measured with high precision based on the power spectrum of the reflected light.

Japanese Unexamined Patent Application, First Publication No. 2005-308394 discloses another film thickness measurement apparatus in which white light is irradiated onto a measurement target multi-layered film, a spectrum is acquired by spectroscopically dispersing transmitted light or reflected light from the measurement target multi-layered film, the spectrum is converted into a frequency signal, wavelet processing is performed to remove components other than an interference signal, and a frequency analysis is performed, so as to measure the film thickness.

Japanese Unexamined Patent Application, First Publication No. H11-314298 discloses a method of manufacturing a multi-layered film in which light is irradiated from a halogen lamp onto the film, a Fourier transform is applied to the resultant optical interference waveform to acquire a spectrum, and a thickness corresponding to a maximum peak value in the spectrum is determined as the film thickness.

The film thickness measurement apparatuses disclosed in the related art have some problems in that the measurement error increases, or the measurement becomes impossible if haze exists in the measurement target film. Haze is diffusion generated on a surface or at an internal side.

In the presence of haze, since coherence is weakened due to diffusion light generated at other areas than the film boundary face, the amplitude of the interference fringe is reduced, and a height of the peak of the power spectrum is lowered. If the height of the peak is lower than that of the noise component, then measurement becomes impossible. Particularly, since haze is considerably generated in the film made of polypropylene or polyethylene, it is difficult to acquire a stable measurement value.

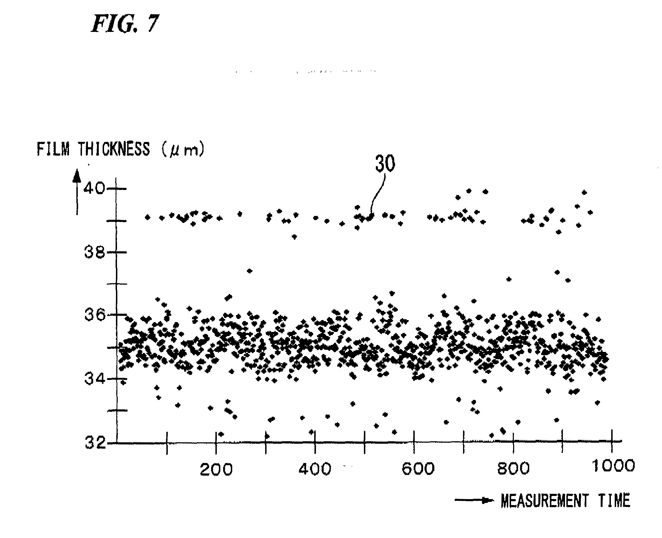

FIG. 7 is a view illustrating a measurement example by the film thickness measurement apparatus in accordance with the related art. The horizontal axis of FIG. 7 represents the number of measurements. The longitudinal axis of FIG 7 represents the film thickness. The black spots represent measurement values. It is recognized that the measurement values are widely spread, and deviant measurement values are frequently generated as shown in the reference numeral 30.

If the thickness of the film having weak coherence is successively measured in an online manner, then a distance between the film and the probe for measuring the film thickness varies due to vibration of the film. For this reason, an appropriate measurement value is acquired only when the probe approaches the film, and a deviant peak may not be measurable because the deviant peak is hidden by noise components. Therefore, as shown in the reference numeral 30, measurement values are significantly deviated.

If the film is crimped or tilted by vibration or the film absorbs light, then it becomes difficult to capture the reflected light using the measurement apparatus. In such a case, since the peak of the power spectrum caused by the film thickness does not appear, measurement values are randomly acquired regardless of the film thickness as shown in the reference numeral 30.

Therefore, there is no choice but to determine whether or not the measurement value is appropriate while a user observes the measurement waveform or determine that the measurement value is not appropriate if the measurement value randomly varies. As a result, the measurement apparatus in accordance with the related art is unreliably and difficultly used in an automatic measurement system or an automatic control system.

### SUMMARY

A film thickness measurement apparatus in accordance with the present invention acquires a stable measurement value by detecting that a measurement value is not accurate due to weak coherence in the film or the like even if haze exists in a measurement target film and an interference fringe seldom occurs.

A film thickness measurement apparatus may include a spectrum acquisition unit that irradiates a light onto a measurement target film, the spectrum acquisition unit acquiring a spectrum of at least one of a reflection light reflected by the measurement target film and a transmission light transmitted through the measurement target film, a power spectrum calculating unit that receives the spectrum to calculate a power spectrum, a film thickness calculating unit that receives the power spectrum to detect a peak position of the power spectrum, the film thickness calculating unit calculating a thickness of the measurement target film based on the peak position, a measurement quality calculating unit that calculates a measurement quality of the thickness, a measurement quality determining unit that receives the measurement quality, the measurement quality determining unit determining whether the thickness is valid or invalid based on the measurement quality and a threshold value, and a film thickness output unit that receives the thickness, the film thickness output unit outputting the thickness if the measurement quality determining unit determines that the thickness is valid.

The measurement quality may be represented by one of a peak height and a peak area at the peak position of the power spectrum.

The film thickness measurement apparatus may further include a threshold calculating unit that receives the power spectrum, the threshold calculating unit calculating the threshold value based on the power spectrum, the threshold calculating unit outputting the threshold value to the measurement quality determining unit.

The threshold calculating unit may calculate at least one of a maximum value and a standard deviation of the power spectrum in a range that does not include the peak position, and the threshold calculating unit may output a constant multiple of one of the maximum value and the standard deviation as the threshold value.

The threshold calculating unit may calculate a first standard deviation in a range that is one of an entire range and a designated range of the power spectrum. A temporary threshold may be output as the threshold value after repeating, at least two times, a process of setting a first constant multiple of the first standard deviation as the temporary threshold, calculating a second standard deviation that is smaller than the temporary threshold in the range, and updating the temporary threshold to a second constant multiple of the second standard deviation.

The measurement quality calculating unit may calculate one of an average value and a difference between a maximum value and a minimum value of a reflectivity of the measurement target film.

If the measurement quality determining unit determines that the thickness is invalid, then the film thickness output unit may output data indicating that measuring of the thickness is failed.

If the measurement quality determining unit determines that the thickness is valid, then the film thickness output unit may output the measurement quality besides the thickness.

The measurement target film may be a multi-layered film. The film thickness calculating unit may calculate thicknesses of each layer of the multi-layered film. The measurement quality calculating unit may calculate measurement qualities of the thicknesses.

The film thickness output unit may output the thicknesses only if the measurement quality determining unit determines that the thicknesses of all layers of the multi-layered film are valid.

A film thickness measurement apparatus that measures a thickness of a measurement target film moving along a length of the measurement target film may include a film thickness measurement unit including a spectrum acquisition unit that irradiates a light onto the measurement target film, the spectrum acquisition unit acquiring a spectrum of at least one of a reflection light reflected by the measurement target film and a transmission light transmitted through the measurement target film, a power spectrum calculating unit that receives the spectrum to calculate a power spectrum, a film thickness calculating unit that receives the power spectrum to detect a peak position of the power spectrum, the film thickness calculating unit calculating a first thickness of the measurement target film based on the peak position, a measurement quality calculating unit that calculates a measurement quality of the first thickness, a measurement quality determining unit that receives the measurement quality, the measurement quality determining unit determining whether the first thickness is valid or invalid based on the measurement quality and a threshold value, and a film thickness output unit that receives the first thickness, the film thickness output unit outputting the first thickness if the measurement quality determining unit determines that the first thickness is valid, and a scanning unit that moves the film thickness measurement unit in a direction of a width of the measurement target film.

If the measurement quality determining unit may determine that the first thickness is invalid, then the film thickness output unit outputs a previous measurement value.

If the measurement quality determining unit may determine that the first thickness is invalid, then the film thickness output unit outputs a second thickness of the measurement target film at an adjacent portion in a transport direction of the measurement target film.

If the measurement quality determining unit determines that the first thickness is invalid, then the film thickness output unit may output a second thickness of the measurement target film at an adjacent portion in a widthwise direction of the measurement target film.

If the measurement quality determining unit determines that the first thickness is invalid, then the film thickness output unit may output an average value between a second thickness of the measurement target film at an adjacent portion in a widthwise direction of the measurement target film and a third thickness of the measurement target film at an adjacent portion in a transport direction of the measurement target film.

A film thickness measurement apparatus that measures a thickness of a measurement target films may include a power spectrum calculating unit that receives a spectrum of at least one of a reflection light reflected by the measurement target film and a transmission light transmitted through the measurement target film, the power spectrum calculating unit calculating a power spectrum based on the spectrum, a film thickness calculating unit that receives the power spectrum to detect a peak position of the power spectrum, the film thickness calculating unit calculating the thickness of the measurement target film based on the peak position, a measurement quality calculating unit that calculates a measurement quality of the thickness, a measurement quality determining unit that receives the measurement quality, the measurement quality determining unit determining whether the thickness is valid or invalid based on the measurement quality and a threshold value, and a film thickness output unit that receives the thickness, the film thickness output unit outputting the thickness if the measurement quality determining unit determines that the thickness is valid.

The film thickness measurement apparatus may further include a threshold calculating unit that receives the power spectrum, the threshold calculating unit calculating the threshold value based on the power spectrum, the threshold calculating unit outputting the threshold value to the measurement quality determining unit.

The threshold calculating unit may calculate at least one of a maximum value and a standard deviation of the power spectrum in a range that does not include the peak position, and the threshold calculating unit outputs a constant multiple of one of the maximum value and the standard deviation as the threshold value.

The threshold calculating unit may calculate a first standard deviation in a range that is one of an entire range and a designated range of the power spectrum. A temporary threshold may be output as the threshold value after repeating, at least two times, a process of setting a first constant multiple of the first standard deviation as the temporary threshold, calculating a second standard deviation that is smaller than the temporary threshold in the range, and updating the temporary threshold to a second constant multiple of the second standard deviation.

The measurement target film may be a multi-layered film. The film thickness calculating unit may calculate thicknesses of each layer of the multi-layered film. The measurement quality calculating unit may calculate measurement qualities of the thicknesses.

The film thickness measurement apparatus in accordance with the present invention irradiates light onto a measurement target film, calculates a power spectrum from a spectrum of a reflected light or a transmitted light, and calculates a film thickness based on a peak of the power spectrum. Measurement quality such as a peak height, a peak area, or reflectivity is calculated whenever the film thickness is calculated. Whether or not the measurement is valid is determined based on the measurement quality and a threshold value. The film thickness measurement value is output if it is determined that the measurement is valid.

Since a deviant measurement value caused by uncertain measurement is not output, it is possible to measure a film thickness distribution of the measurement target film and improve reliability of the measurement. In addition, it is possible to measure the thickness even if the film is made of a material such as polypropylene or polyethylene having an amount of haze, which makes it difficult to measure the thickness in the related art.

In addition, since an uncertain measurement value caused by crimps or tilt of the film is not output, it is possible to adopt the present invention to an online film thickness gauge. It was difficult to automate the film thickness measurement apparatus because an operator should monitor the power spectrum to remove the uncertain measurement value in the related art. In contrast, in the film thickness measurement apparatus according to the present invention, it is possible to automatically remove an uncertain measurement value. Therefore, the film thickness measurement apparatus in accordance with the present invention can be used as the film thickness gauge of an automatic control apparatus.

### BRIEF DESCRIPTION OF THE DRAWINGS

The above features and advantages of the present invention will be more apparent from the following description of certain preferred embodiments taken in conjunction with the accompanying drawings, in which:
FIG. 1 is a block diagram illustrating a film thickness measurement apparatus in accordance with a first preferred embodiment of the present invention;
FIG. 2 is a view illustrating a measurement example by the film thickness measurement apparatus of FIG. 1;
FIG. 3 is a block diagram illustrating a film thickness measurement apparatus in accordance with a second preferred embodiment of the present invention;
FIG. 4 is a block diagram illustrating a film thickness measurement apparatus in accordance with a third preferred embodiment of the present invention;
FIG. 5 is a view illustrating a configuration of an online film thickness gauge including the film thickness measurement apparatus in accordance with the present invention;
FIG. 6 is a block diagram illustrating a film thickness measurement apparatus in accordance with the related art; and
FIG. 7 is a view illustrating a measurement example by the film thickness measurement apparatus in accordance with the related art.

### DETAILED DESCRIPTION OF THE PREFERRED EMBODIMENTS

The present invention will be now described herein with reference to illustrative embodiments. Those skilled in the art will recognize that many alternative embodiments can be accomplished using the teaching of the present invention and that the present invention is not limited to the embodiments illustrated for explanatory purpose.

### First Preferred Embodiment

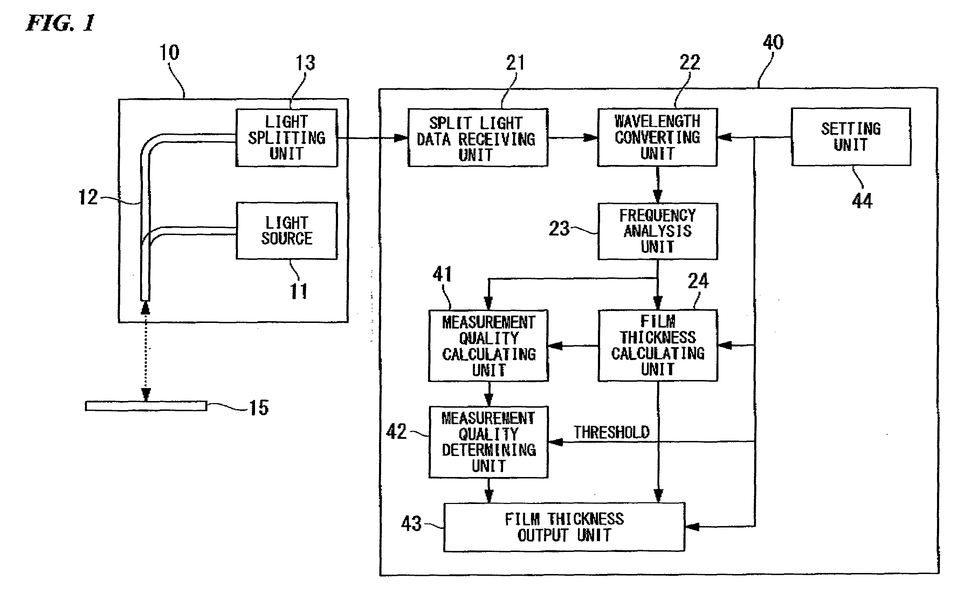

A first preferred embodiment of the present invention will be described. FIG. 1 is a block diagram illustrating a film thickness measurement apparatus in accordance with the first preferred embodiment of the present invention. In FIG 1, like parts are given like reference numerals as in FIG. 6, and descriptions thereof will be omitted.

The film thickness measurement apparatus in accordance with the first preferred embodiment of the present invention includes a reflection spectrum acquisition unit 10 and an operation unit 40. The reflection spectrum acquisition unit 10 includes a light source 11 and a light splitting unit 13. In the reflection spectrum acquisition unit 10, white light is irradiated from the light source 11, and is transmitted to a measurement target film 15 through an optical fiber 12, The light splitting unit 13 receives a light reflected by the measurement target film 15. The light splitting unit 13 spectroscopically disperses the reflected light to acquire a reflection spectrum and converts the reflection spectrum into an electric signal to output the electric signal.

The operation unit 40 includes a split light data receiving unit 21, a wavelength converting unit 22, a frequency analysis unit 23, a film thickness calculating unit 24, a measurement quality calculating unit 41, a measurement quality determining unit 42, a film thickness output unit 43, and a setting unit 44. The wavelength converting unit 22 and the frequency analysis unit 23 compose a power spectrum operation unit.

The split light data receiving unit 21 receives the reflection spectrum from the light splitting unit 13 and outputs the reflection spectrum to the wavelength converting unit 22. The wavelength converting unit 22 selects a predetermined wavelength range of the reflection spectrum, rearranges the reflection spectrum of the selected wavelength range on an equally scaled wave number domain, calculates a wave number domain reflection spectrum, and outputs the wave number domain reflection spectrum to the frequency analysis unit 23.

The frequency analysis unit 23 applies a Fourier transform to the wave number domain reflection spectrum to calculate the power spectrum and outputs the power spectrum to the film thickness calculating unit 24. The film thickness calculating unit 24 calculates an optical film thickness corresponding to the frequency where a peak of the input power spectrum is acquired and calculates the physical film thickness based on the refractive index of the film 15. Such operations are similar to those described in FIG 6 as the related art.

The measurement quality calculating unit 41 receives the power spectrum calculated by the frequency analysis unit 23. The film thickness calculating unit 24 reports which peak is used to calculate the physical film thickness to the measurement quality calculating unit 41. The measurement quality calculating unit 41 calculates a peak height or a peak area of the peak used to measure the film thickness and outputs the calculated peak height or peak area to the measurement quality determining unit 42.

The peak height is the height of the power spectrum where the power spectrum has its peak. The peak area is the area of the power spectrum where the power spectrum has its peak. The measurement quality determining unit 42 compares the value calculated by the measurement quality calculating unit 41 with a threshold value, determines whether the measurement is valid or invalid, and outputs data regarding whether the measurement is valid or invalid and the input measurement quality.

The film thickness output unit 43 receives the physical film thickness measured by the film thickness calculating unit 24, the measurement quality, and the data determined by the measurement quality determining unit 42 regarding whether the measurement is valid or invalid. If the input measurement quality is valid, then the film thickness output unit 43 outputs, to an external unit, the measurement quality and the physical film thickness input from the film thickness calculating unit 24. If the input measurement quality is invalid, then the film thickness output unit 43 does not output the measurement quality and the physical film thickness. The setting unit 44 sets data such as parameters required in the operation in the wavelength converting unit 22, the film thickness calculating unit 24, and the film thickness output unit 43 and sets the threshold value in the measurement quality determining unit 42.

Next, the measurement quality and the threshold value used by the measurement quality determining unit 42 will be described. The threshold value is set to a value capable of determining whether or not the peak used in the film thickness measurement is generated from a noise component. For example, if a noise component including noise in the optical system of the reflection spectrum acquisition unit 10 and noise caused by the charge coupled device (CCD) used in the light splitting unit 13 is 0.03, then the threshold value of the peak height is set to 0.05, and the threshold value of the peak area is set to 1.0.

By setting the threshold value of the peak height to be larger than the noise component, it is possible to certainly distinguish between the noise and the peak caused by the interference fringe. In addition, by setting the threshold value of the peak area to be relatively large, it is possible to discriminate only a peak having a large height and a wide area, and thus, more certainly discriminate noise. The peak height or the peak area can be calculated in a simple manner.

The measurement quality may be the peak height or the peak area as it is. If the measurement quality is standardized by dividing the peak height or the peak value by the threshold value, then evaluation can be conveniently made in the future. If the peak height or the peak area is larger than or equal to the threshold value, then the measurement quality determining unit 42 determines that the film thickness measurement value is valid. If the peak height or the peak area is smaller than the threshold value, then the measurement quality determining unit 42 determines that the film thickness measurement value is invalid. The film thickness output unit 43 outputs the film thickness calculated by the film thickness calculating unit 24 only when the output from the measurement quality determining unit 42 is determined valid. The data output from the film thickness output unit 43 may include only the film thickness. But if the data includes the film thickness and the measurement quality at the same time, then the measurement value can be evaluated in the future.

The computation formula for the threshold value and the measurement quality is not limited to the aforementioned values. Specifically, the threshold value may be set to any value distinguishable from noise and the measurement quality may be set to any index representing accuracy of the measurement value. If the threshold value is increased, then the reliability of the measurement value can be increased and the measurement frequency may be reduced.

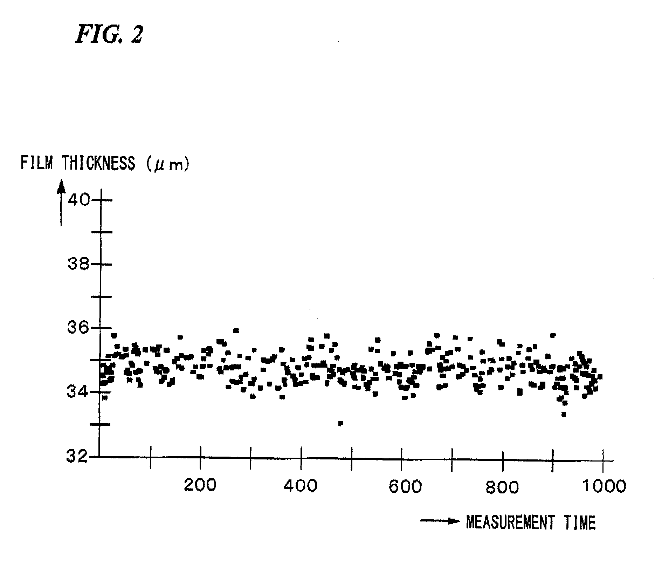

FIG. 2 is a view illustrating a measurement example by the film thickness measurement apparatus of FIG. 1. The horizontal axis of FIG. 2 represents the number of measurements. The longitudinal axis of FIG. 2 represents the film thickness. In the measurement example of FIG 7 as the related art, deviant measurement values deviant from the average value frequently appear as shown in the reference number 30. On the contrary, in the measurement example of FIG. 2, the deviant measurement value does not appear since the film thickness measurement value is not output if the measurement quality is smaller than the threshold value. In addition, dispersion of the measurement value is also reduced.

### Second Preferred Embodiment

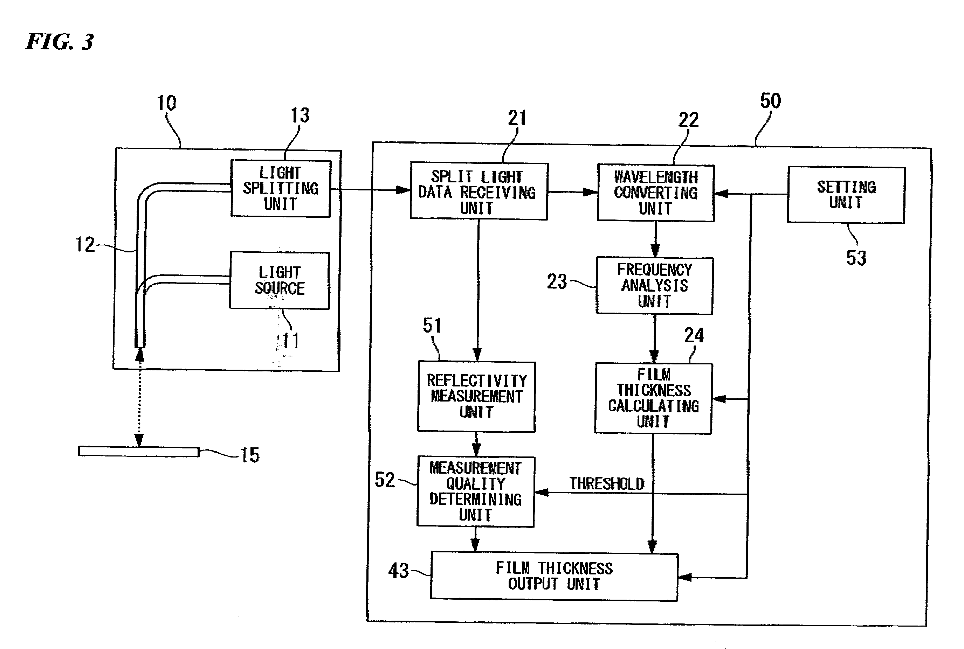

A second preferred embodiment of the present invention will be described. FIG. 3 is a block diagram illustrating a film thickness measurement apparatus in accordance with the second preferred embodiment of the present invention. In FIG 3, like parts are given like reference numerals as in FIG. 1, and descriptions thereof will be omitted. In the film thickness measurement apparatus in accordance with the second preferred embodiment of the present invention, reflectivity of the film 15 is used as the measurement quality.

The film thickness measurement apparatus in accordance with a second preferred embodiment of the present invention includes a reflection spectrum acquisition unit 10 and an operation unit 50. The operation unit 50 includes a split light data receiving unit 21, a wavelength converting unit 22, a frequency analysis unit 23, a film thickness calculating unit 24, a film thickness output unit 43, a reflectivity measurement unit 51, a measurement quality determining unit 52, and a setting unit 53. The reflectivity measurement unit 51 operates as measurement quality calculating unit. In addition, a configuration of measuring the film thickness is similar to that of FIG. 1, and a description thereof will be omitted.

The split light data receiving unit 21 receives a reflected light spectrum and outputs the reflected light spectrum to the reflectivity measurement unit 51. The reflectivity measurement unit 51 calculates an average reflectivity of the film 15 or a difference between maximum and minimum values of a reflectivity from the input reflectivity spectrum and outputs the average reflectivity or the difference to the measurement quality determining unit 52.

The measurement quality determining unit 52 receives the threshold value from the setting unit 53. The measurement quality determining unit 52 determines whether or not the film thickness measurement value is valid based on the threshold value and the reflectivity measured by the reflectivity measurement unit and outputs the determination result to the film thickness output unit 43. If the film thickness measurement value is valid, then the film thickness output unit 43 outputs the film thickness and the measurement quality to an external unit. On the contrary, if the film thickness measurement value is invalid, then the film thickness output unit 43 does not output the film thickness and the measurement quality.

Next, the operation of the reflectivity measurement unit 51 will be described. The reflectivity measurement unit 51 stores a reference spectrum functioning as a reference of the reflectivity and calculates the reflectivity by dividing the reflectivity spectrum acquired by the split light data receiving unit 21 by the reference spectrum. The reflectivity is calculated for each wave number, and the average reflectivity or the difference between maximum and minimum values of the reflectivity is calculated and then output.

The average reflectivity is an index representing how much reflected light has been input to the light splitting unit 13. For example, if the film 15 is tilted, then the reflected light is not input to the light splitting unit 13, and the average reflectivity approaches 0%. In this case, it may be impossible to perform accurate measurement. In addition, the difference between maximum and minimum values of the reflectivity represents an interference amplitude. If the value of the difference is larger than or equal to a predetermined level, then the interference fringe appears, and it is possible to accurately measure the film thickness.

In order to acquire the reference spectrum, a plate made of a material having reflectivity close to that of the film 15 is selected from a group including polyethylene terephthalate (which is hereinafter referred to as PET), glass, a silicon wafer, or the like, and this plate is set such that the reflected light input to the light splitting unit 13 becomes maximum. The reflectivity measurement unit 51 receives the output spectrum of the split light data receiving unit 21 at that time as the reference spectrum. If a transparent material such as PET or glass is used, then a thick material having a thickness that is larger than or equal to 500 µm is selected, so that the interference fringe will not appear.

The measurement quality determining unit 52 compares the input average reflectivity or the difference between maximum and minimum values of the reflectivity with the threshold value to determine whether the film thickness measurement value is valid or invalid and outputs the determination result to the film thickness output unit 43. The measurement quality may be represented by the value of the input average reflectivity or the difference between maximum and minimum values of the reflectivity. If the measurement quality is standardized by dividing the reflectivity by the threshold value, then evaluation may be conveniently made in the future. If the film thickness measurement value is valid, then the film thickness output unit 43 outputs the film thickness measurement value and the measurement quality to an external unit On the contrary, if the film thickness measurement value is invalid, then the film thickness output unit 43 does not output the film thickness measurement value and the measurement quality to an external unit.

If the reflectivity is higher than or equal to the threshold value (e.g.,10% for the average reflectivity or 5% for the difference between maximum and minimum values), then the peak generated by interference is formed, and it is possible to accurately measure the film thickness. If the reflectivity is lower than or equal to the threshold value due to tilt of the film or the like, then it may be impossible to perform accurate measurement. In this case, the film thickness measurement value is not output.

Regardless of the embodiment, the threshold value may be arbitrarily set depending on the situation. In addition, the film thickness measurement value may be checked up in the course of the measurement. If the number of abnormal measurement values is too large, then the threshold value may be adjusted to increase. If the number of measurement outputs is too small, then the threshold value may be adjusted to decrease. Furthermore, the method of measuring reflectivity is not particularly limited to the second preferred embodiment of the present invention, but other methods may be used.

### Third Preferred Embodiment

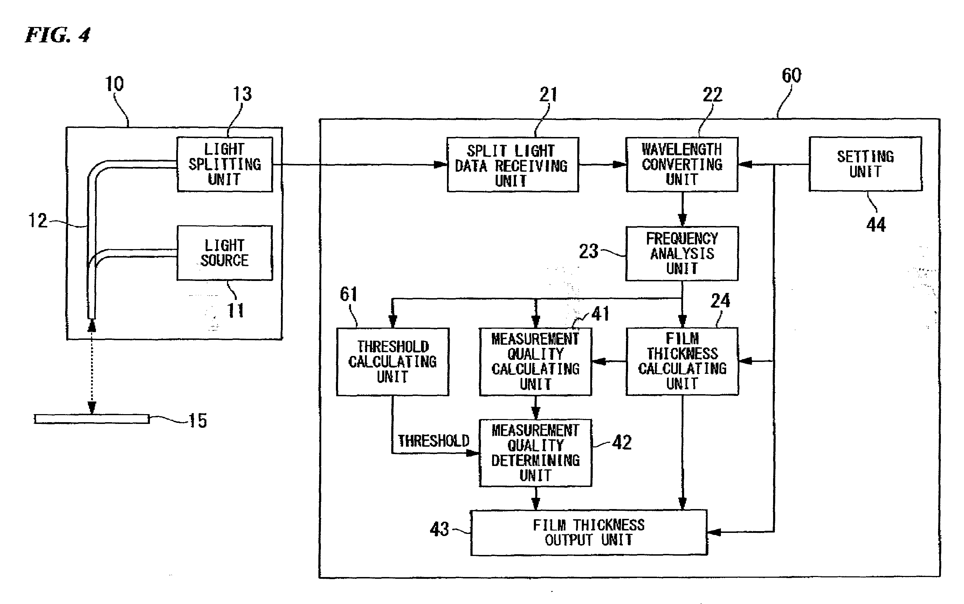

A third preferred embodiment of the present invention will be described. In the first preferred embodiment of the present invention, the threshold value is constant. On the contrary, in the third preferred embodiment of the present invention, the threshold value is dynamically determined in the course of the measurement. FIG. 4 is a block diagram illustrating a film thickness measurement apparatus in accordance with the third preferred embodiment of the present invention. In FIG. 4, like parts are given like reference numerals as in FIG. 1, and descriptions thereof will be omitted.

The film thickness measurement apparatus in accordance with the third preferred embodiment of the present invention includes a reflection spectrum acquisition unit 10 and an operation unit 60. The reflection spectrum acquisition unit 10 includes a light source 11 and a light splitting unit 13. The operation unit 60 includes a split light data receiving unit 21, a wavelength converting unit 22, a frequency analysis unit 23, a film thickness calculating unit 24, a measurement quality calculating unit 41, a measurement quality determining unit 42, a film thickness output unit 43, a setting unit 44, and a threshold calculating unit 61. The operation of the film thickness measurement apparatus except for the threshold calculating unit 61 is similar to that described in conjunction with FIG 1, and a description thereof will be omitted.

The frequency analysis unit 23 outputs a power spectrum to the threshold calculating unit 61. The threshold calculating unit 61 calculates the threshold value based on the input power spectrum and outputs the threshold value to the measurement quality determining unit 42.

Next, the operation of the threshold calculating unit 61 will be described. The measurement quality calculating unit 41 calculates a peak height or a peak area of the peak where the film thickness is measured and outputs the peak height or the peak area to the measurement quality determining unit 42. The operation of the threshold calculating unit 61 is performed using one of the following two ways.

As a first way, a maximum value or a standard deviation within a frequency range where the interference peak caused by the film 15 does not appear is calculated, and an integer multiple of the maximum value or the standard deviation is output as the threshold value. The integer value is set between 1.2 and 2.0 if the maximum value is used. The integer value is set to 6.0 if the standard deviation is used.

As a second way, a standard deviation is acquired across the entire power spectrum or within a designated range of the power spectrum, and integer multiple of the standard deviation is set to an interim threshold value. Further, a standard deviation is acquired for the power spectrum signals smaller than the interim threshold value, and an integer multiple of the standard deviation is set to an interim threshold value again. An interim threshold value acquired by recursively repeating such a process may be set to a threshold value. For example, the integer multiplied by the standard deviation may be set to 6.0, and the number of repetitions may be set to 10.

The first way is simple but cumbersome because an area having no interference peak should be selected. On the other hand, in the second way, calculation is complicated, but setting can be readily performed because it is not necessary to consider where the peak appears.

As a result, it is possible to automatically determine an optimal threshold value at all times even if the noise level varies in the course of the measurement. In the first preferred embodiment, a margin has to be given to the threshold value considering variation in the noise level. Therefore, a ratio of the invalid measurement values increases, and it takes a lot of time to complete the measurement.

In the third preferred embodiment, since the threshold value also varies depending on the noise level, it is not necessary to provide a margin to the threshold value. Therefore, a ratio of the invalid measurement values decreases, and it is possible to complete the measurement within a shorter time.

Particularly, if the measurement is a online measurement that is continuously performed, then the output light amount of the light source varies, and the reflected light amount also varies due to vibration of the film. Accordingly, the noise level frequently varies. In the third preferred embodiment, since the threshold value automatically varies depending on variation in the noise level, it can be preferably employed in the online measurement.

If the measurement quality is determined to be invalid, then non-measurable data may be output, or a previous measurement value as well as the non-measurable data may be output.

In the aforementioned embodiments, the film thickness is calculated based on the power spectrum acquired by spectroscopically dispersing reflected light of the film 15. The film, thickness may be calculated based on the power spectrum acquired by spectroscopically dispersing transmitted light of the film 15. The first, second, and third preferred embodiments of the present invention are similar to one another except that the transmitted light is used, and thus, a description thereof will be omitted.

Furthermore, it is possible to measure thicknesses of each layer of the multi-layered film as well as a single-layered film. The interference fringes from each layer of the multi-layered film typically creates peaks at different locations in the power spectrum. Therefore, it is possible to separately measure thicknesses of each layer of the multi-layered film by calculating the thicknesses based on those peaks using the aforementioned methods.

In the case where thicknesses of each layer of the multi-layered film are measured in all of the first, second, and third preferred embodiments of the present invention, data may be output to an external unit only when all determination values of measurement quality of all of the layers represent valid, or data may be output to an external unit only for the layers having the peak height or the peak area that is larger than or equal to the threshold value.

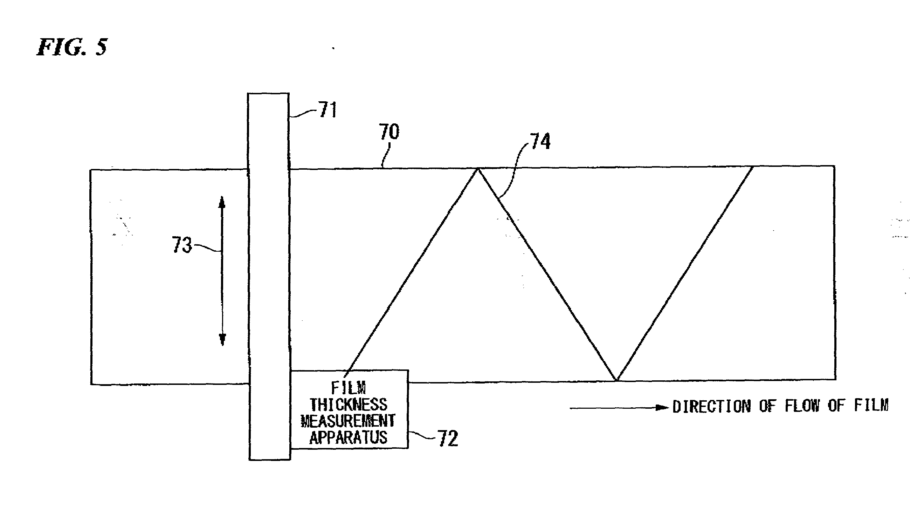

FIG 5 is a view illustrating a configuration of an online film thickness gauge including the film thickness measurement apparatus in accordance with the present invention. The online film thickness gauge is used in a film manufacturing factory. The online film thickness gauge includes a scanning unit 71, and the scanning unit 71 includes the film thickness measurement apparatus 72. The film thickness measurement apparatus 72 has the configuration of the film thickness measurement apparatus in accordance with the first, second, or third preferred embodiment of the present invention. In the online film thickness gauge, a manufactured film 70 is transmitted to the right direction.

The arrow 73 denotes a scanning direction of the film thickness measurement apparatus 72. The scanning unit 71 drives the film thickness measurement apparatus 72 for scanning in the direction of the arrow 73. Since the manufactured film 70 is transmitted to the right direction, the measurement locus of the film thickness measurement apparatus 72 becomes a serrated line 74. For this reason, the film thickness can be measured in both the widthwise direction and the lengthwise direction of the manufactured film 70 at the same time. The serrated line 74 represents the measurement locus.

In the film thickness measurement apparatus in accordance with the first, second, and third preferred embodiments of the present invention, if the peak height, the peak area, or the reflectivity is lower than the corresponding threshold value, then the film thickness measurement value is not output. Therefore, a point having no film thickness measurement value may occur. The film thickness value of this point may be set using a film thickness measurement value of an adjacent point in the widthwise direction or the lengthwise direction or a previous film thickness measurement value or may be interpolated using an average value of film thickness measurement values of adjacent points in the widthwise direction and the lengthwise direction. As a result, if the film thickness measurement apparatus in accordance with the first, second, or third preferred embodiment of the present invention is used as the online film thickness gauge, then it is possible to prevent omission of the measurement value.

As used herein, the following directional terms "forward, rearward, above, downward, vertical, horizontal, below, and transverse" as well as any other similar directional terms refer to those directions of an apparatus equipped with the present invention. Accordingly, these terms, as utilized to describe the present invention should be interpreted relative to an apparatus equipped with the present invention.

The term "configured" is used to describe a component, section or part of a device includes hardware and/or software that is constructed and/or programmed to carry out the desired function.

Moreover, terms that are expressed as "means-plus function" in the claims should include any structure that can be utilized to carry out the function of that part of the present invention.

The terms of degree such as "substantially," "about," "nearly", and "approximately" as used herein mean a reasonable amount of deviation of the modified term such that the end result is not significantly changed. For example, these terms can be construed as including a deviation of at least ± 5 percents of the modified term if this deviation would not negate the meaning of the word it modifies.

While preferred embodiments of the present invention have been described and illustrated above, it should be understood that these are examples of the present invention and are not to be considered as limiting. Additions, omissions, substitutions, and other medications can be made without departing from the scope of the present invention. Accordingly, the invention is not to be considered as being limited by the foregoing description, and is only limited by the scope of the claims.

## Claims

1. A film thickness measurement apparatus comprising:
a spectrum acquisition unit that irradiates a light onto a measurement target film, the spectrum acquisition unit acquiring a spectrum of at least one of a reflection light reflected by the measurement target film and a transmission light transmitted through the measurement target film;
a power spectrum calculating unit that receives the spectrum to calculate a power spectrum;
a film thickness calculating unit that receives the power spectrum to detect a peak position of the power spectrum, the film thickness calculating unit calculating a thickness of the measurement target film based on the peak position;
a measurement quality calculating unit that calculates a measurement quality of the thickness;
a measurement quality determining unit that receives the measurement quality, the measurement quality determining unit determining whether the thickness is valid or invalid based on the measurement quality and a threshold value; and
a film thickness output unit that receives the thickness, the film thickness output unit outputting the thickness if the measurement quality determining unit determines that the thickness is valid.

2. The film thickness measurement apparatus according to claim 1, wherein the measurement quality is represented by one of a peak height and a peak area at the peak position of the power spectrum.

3. The film thickness measurement apparatus according to claim 1, further comprising:
a threshold calculating unit that receives the power spectrum, the threshold calculating unit calculating the threshold value based on the power spectrum, the threshold calculating unit outputting the threshold value to the measurement quality determining unit.

4. The film thickness measurement apparatus according to claim 3, wherein the threshold calculating unit calculates at least one of a maximum value and a standard deviation of the power spectrum in a range that does not include the peak position, and the threshold calculating unit outputs a constant multiple of one of the maximum value and the standard deviation as the threshold value.

5. The film thickness measurement apparatus according to claim 3, wherein the threshold calculating unit calculates a first standard deviation in a range that is one of an entire range and a designated range of the power spectrum, and a temporary threshold is output as the threshold value after repeating, at least two times, a process of setting a first constant multiple of the first standard deviation as the temporary threshold, calculating a second standard deviation that is smaller than the temporary threshold in the range, and updating the temporary threshold to a second constant multiple of the second standard deviation.

6. The film thickness measurement apparatus according to claim 1, wherein the measurement quality calculating unit calculates one of an average value and a difference between a maximum value and a minimum value of a reflectivity of the measurement target film.

7. The film thickness measurement apparatus according to claim 1, wherein if the measurement quality determining unit determines that the thickness is invalid, then the film thickness output unit outputs data indicating that measuring of the thickness is failed.

8. The film thickness measurement apparatus according to claim 1, wherein if the measurement quality determining unit determines that the thickness is valid, then the film thickness output unit outputs the measurement quality besides the thickness.

9. The film thickness measurement apparatus according to claim 1, wherein the measurement target film is a multi-layered film, the film thickness calculating unit calculates thicknesses of each layer of the multi-layered film, and the measurement quality calculating unit calculates measurement qualities of the thicknesses.

10. The film thickness measurement apparatus according to claim 9, wherein the film thickness output unit outputs the thicknesses only if the measurement quality determining unit determines that the thicknesses of all layers of the multi-layered film are valid.

11. A film thickness measurement apparatus that measures a thickness of a measurement target film moving along a length of the measurement target film comprising:
a film thickness measurement unit comprising:
a spectrum acquisition unit that irradiates a light onto the measurement target film, the spectrum acquisition unit acquiring a spectrum of at least one of a reflection light reflected by the measurement target film and a transmission light transmitted through the measurement target film;
a power spectrum calculating unit that receives the spectrum to calculate a power spectrum;
a film thickness calculating unit that receives the power spectrum to detect a peak position of the power spectrum, the film thickness calculating unit calculating a first thickness of the measurement target film based on the peak position;
a measurement quality calculating unit that calculates a measurement quality of the first thickness;
a measurement quality determining unit that receives the measurement quality, the measurement quality determining unit determining whether the first thickness is valid or invalid based on the measurement quality and a threshold value; and
a film thickness output unit that receives the first thickness, the film thickness output unit outputting the first thickness if the measurement quality determining unit determines that the first thickness is valid; and
a scanning unit that moves the film thickness measurement unit in a direction of a width of the measurement target film.

12. The film thickness measurement apparatus according to claim 11, wherein if the measurement quality determining unit determines that the first thickness is invalid, then the film thickness output unit outputs a previous measurement value.

13. The film thickness measurement apparatus according to claim 11, wherein if the measurement quality determining unit determines that the first thickness is invalid, then the film thickness output unit outputs a second thickness of the measurement target film at an adjacent portion in a transport direction of the measurement target film.

14. The film thickness measurement apparatus according to claim 11, wherein if the measurement quality determining unit determines that the first thickness is invalid, then the film thickness output unit outputs a second thickness of the measurement target film at an adjacent portion in a widthwise direction of the measurement target film.

15. The film thickness measurement apparatus according to claim 11, wherein if the measurement quality determining unit determines that the first thickness is invalid, then the film thickness output unit outputs an average value between a second thickness of the measurement target film at an adjacent portion in a widthwise direction of the measurement target film and a third thickness of the measurement target film at an adjacent portion in a transport direction of the measurement target film.

16. A film thickness measurement apparatus that measures a thickness of a measurement target film comprising:
a power spectrum calculating unit that receives a spectrum of at least one of a reflection light reflected by the measurement target film and a transmission light transmitted through the measurement target film, the power spectrum calculating unit calculating a power spectrum based on the spectrum;
a film thickness calculating unit that receives the power spectrum to detect a peak position of the power spectrum, the film thickness calculating unit calculating the thickness of the measurement target film based on the peak position;
a measurement quality calculating unit that calculates a measurement quality of the thickness;
a measurement quality determining unit that receives the measurement quality, the measurement quality determining unit determining whether the thickness is valid or invalid based on the measurement quality and a threshold value; and
a film thickness output unit that receives the thickness, the film thickness output unit outputting the thickness if the measurement quality determining unit determines that the thickness is valid.

17. The film thickness measurement apparatus according to claim 16, further comprising:
a threshold calculating unit that receives the power spectrum, the threshold calculating unit calculating the threshold value based on the power spectrum, the threshold calculating unit outputting the threshold value to the measurement quality determining unit.

18. The film thickness measurement apparatus according to claim 17, wherein the threshold calculating unit calculates at least one of a maximum value and a standard deviation of the power spectrum in a range that does not include the peak position, and the threshold calculating unit outputs a constant multiple of one of the maximum value and the standard deviation as the threshold value.

19. The film thickness measurement apparatus according to claim 17, wherein the threshold calculating unit calculates a first standard deviation in a range that is one of an entire range and a designated range of the power spectrum, and a temporary threshold is output as the threshold value after repeating, at least two times, a process of setting a first constant multiple of the first standard deviation as the temporary threshold, calculating a second standard deviation that is smaller than the temporary threshold in the range, and updating the temporary threshold to a second constant multiple of the second standard deviation.

20. The film thickness measurement apparatus according to claim 16, wherein the measurement target film is a multi-layered film, the film thickness calculating unit calculates thicknesses of each layer of the multi-layered film, and the measurement quality calculating unit calculates measurement qualities of the thicknesses.
